# EUROPEAN PATENT APPLICATION

(11) **EP 4 679 516 A1**
(43) Date of publication of application: **14.01.2026**
(21) Application number: 25188517.4
(22) Date of filing: 09.07.2025
(51) Int. Cl.: H01M 4/13, H01M 10/0525, H01M 10/04, H01M 10/0566, H01M 4/02, H01M 4/131

(54) **AN ELECTRODE, AN ELECTRODE ASSEMBLY, AND A RECHARGEABLE BATTERY INCLUDING THE SAME**

(30) Priority: 09.07.2024 KR 20240090650
(71) Applicant: SAMSUNG SDI CO., LTD., Yongin-si, Gyeonggi-do 17084 (KR)
(72) Inventor: HONG, Daehyun, 17084 Gyeonggi-do (KR); KIM, Yeongap, 17084 Gyeonggi-do (KR); JUNG, Injoe, 17084 Gyeonggi-do (KR); JEON, Seongho, 17084 Gyeonggi-do (KR)
(74) Representative: Maiwald GmbH

(57) **Abstract**

An electrode for a rechargeable battery may include a substrate, and an active material layer formed on the substrate. The substrate has a plurality of holes, where the holes have depths that become deeper from an edge of the substrate to a center of the substrate.

## Description

### BACKGROUND OF THE DISCLOSURE

### (a) Field of the Disclosure

Examples of the present disclosure relate to an electrode, an electrode assembly, and a rechargeable battery including the electrode assembly and as such the electrode.

### (b) Description of the Related Art

As technology for portable devices develops, the demand for rechargeable batteries as an energy source is increasing. Rechargeable batteries, unlike primary batteries, are batteries that are typically repeatedly charged and discharged.

These rechargeable batteries can be formed by overlapping a positive electrode, a separator, and a negative electrode, and winding the positive electrode, the separator, and the negative electrode to form a cylindrical or jellyroll-shaped electrode assembly, or by separating the positive electrode, the separator, and the negative electrode into sheets and then stacking them to form a laminated electrode assembly.

In the case of a sheet-shaped laminated electrode assembly, the amount of electrolyte impregnation may differ between the edge portion and the central portion of the sheet-shaped assembly when an electrolyte is injected. That is, the active material layer at the edge is advantageous for electrolyte wetting, whereas electrolyte wetting becomes less effective as the electrolyte moves toward the center. Therefore, the electrolyte wetting at the edge and the center may not be uniform.

When the electrolyte is not uniform like this, lithium (Li) precipitation occurs, shortening the battery life and making rapid charging difficult.

The above information disclosed in this Background section is only for enhancement of understanding of the background of the disclosure and therefore it may contain information that does not form the prior art that is already known in this country to a person of ordinary skill in the art.

### SUMMARY OF THE DISCLOSURE

Examples of the present disclosure include an electrode, an electrode assembly, and a rechargeable battery including the same, the electrode being capable of reducing non-uniformity of electrolyte between an edge and a center of the electrode.

An electrode for a rechargeable battery may include a substrate, and an active material layer formed on the substrate, and having a plurality of holes, where the hole has a depth becoming deeper from an edge of the substrate to a center.

The holes may be arranged in a matrix configuration and are spaced at predetermined, regular or desired intervals.

An electrode for a rechargeable battery may further include connection portions connecting the holes.

The connection portion may become deeper from the edge of the substrate to the center.

The connection portion may include a first connection portion formed in a substantially horizontal direction and a second connection portion formed in a substantially vertical direction.

An electrode assembly may include a separator, and a positive electrode and a negative electrode located on opposite sides interposing the separator, where at least one of the positive electrode and the negative electrode may include a substrate, and an active material layer formed on the substrate and having a plurality of holes having a depth becoming deeper from an edge of the substrate to a center.

The holes may be arranged in a matrix configuration and are spaced at predetermined, desired or regular intervals.

An electrode for a rechargeable battery may further include connection portions connecting the holes.

The connection portion may become deeper from the edge of the substrate to the center.

The connection portion may include a first connection portion formed in a substantially horizontal direction and a second connection portion formed in a substantially vertical direction.

The positive electrode, the separator, and the negative electrode may form a jelly-roll structure wound in a band shape in which a length in a first direction is longer than a length in a second direction substantially perpendicular to the first direction, and the connection portion may have a depth increasing in the second direction.

The second direction may be a rotation axis direction of the jelly-roll.

The positive electrode, the separator, and the negative electrode may form a jelly-roll structure wound in a band shape in which a length in a first direction is longer than a length in a second direction substantially perpendicular to the first direction, and the hole may have a depth increasing in the second direction.

The second direction may be the rotation axis direction of the jelly-roll.

A rechargeable battery may include an electrode assembly, a case accommodating the electrode assembly, and an electrolyte accommodated within the case together with the electrode assembly, where the hole has a depth increasing along a direction in which the electrolyte is injected.

The connection portion may have a depth increasing along a direction in which the electrolyte is injected.

By forming holes with gradually increasing depth in the active material layer as in the present disclosure, the wettability of the active material layer with respect to the electrolyte is improved. This improves the adhesion of the electrolyte at the interface with the separator, thereby reducing or suppressing interfacial lifting between the electrode and the separator.

In addition, since the electrolyte quickly wets not only the edges but also the center, the electrolyte impregnation of the edges and the center may become substantially uniform. Therefore, the life of the rechargeable battery can be increased by reducing or preventing lithium from precipitating due to non-uniform distribution of the electrolyte.

### BRIEF DESCRIPTION OF THE DRAWINGS

The accompanying drawings illustrate an example embodiment of the present disclosure, and together with the foregoing disclosure, serve to provide further understanding of the technical features of the present disclosure, and thus, the present disclosure is not construed as being limited to the drawing.
FIG. 1 is a top plan view of an electrode included in a rechargeable battery, according to an example embodiment.
FIG. 2 is a cross-sectional view taken along line II-II' of FIG. 1.
FIG. 3 is a cross-sectional view taken along line III-III' of FIG. 1.
FIG. 4 is a top plan view of an electrode included in a rechargeable battery according to another example embodiment.
FIG. 5 is a cross-sectional view taken along line V-V' of FIG. 4.
FIG. 6 is a cross-sectional view taken along line VI-VI' of FIG. 4.
FIG. 7 is a cross-sectional view of an electrode for a rechargeable battery, according to another example embodiment.
FIG. 8 and FIG. 9 are schematic top plan views of an electrode for a rechargeable battery, according to another example embodiment.
FIG. 10 is a schematic perspective view of a rechargeable battery, according to an example embodiment.
FIG. 11 is a schematic perspective view of a rechargeable battery, according to an example embodiment.
FIG. 12 is a drawing taken along line XII-XII' of FIG. 11.

### DETAILED DESCRIPTION

Hereinafter, example embodiments of the present disclosure will be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe their own disclosure as best as possible. Accordingly, since the example embodiment described in the specification and the configurations shown in the drawings are merely example embodiments and configurations of the present disclosure, they do not represent all of the technical ideas of the present disclosure, and it should be understood that various equivalents and modified examples, which may replace the example embodiments, are possible when filing the present application.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, in order to help understanding of the present disclosure, the accompanying drawings are not drawn to scale, and the dimensions of some components may be exaggerated. In addition, the same reference numerals may be assigned to the same elements in different example embodiments.

Although the terms "first," "second," and the like are used to describe various elements, these elements are not limited by these terms. These terms are used to distinguish one element from another, and unless stated to the contrary, a first element may be a second element.

Throughout the specification, unless stated otherwise, each element may be singular or plural.

For ease of explanation, a spatial relative term such as "beneath," "below," "lower," "above," "upper," or the like may be used herein in order to describe a relationship between one element or feature and another element(s) or feature(s), as shown in the drawings. Spatial relative position is to be understood to encompass different directions of a device in use or operation in addition to directions shown in the drawings. For example, when the device in the drawing is turned over, an element described as "below" or "bottom" another element may be understood to be "above" or "above" another element. Therefore, the term "below" may encompass both upward and downward directions.

**In** addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

The terms used herein are intended to describe the example embodiments of the present disclosure and are not intended to limit the present disclosure.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

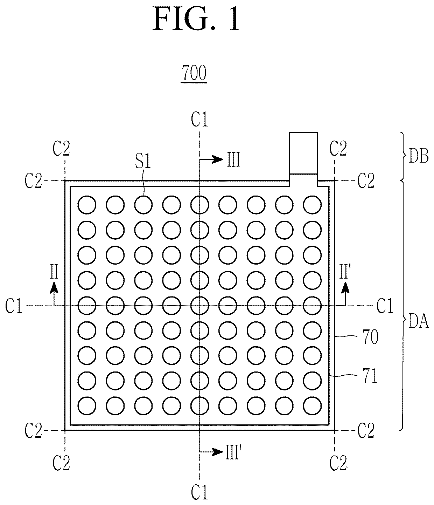

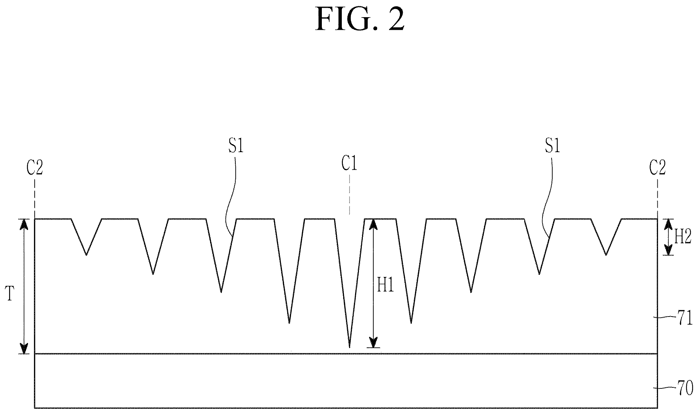

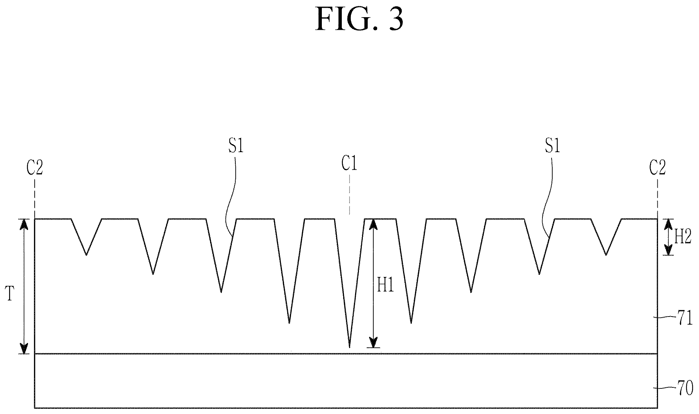

FIG. 1 is a top plan view of an electrode included in a rechargeable battery according to an example embodiment, FIG. 2 is a cross-sectional view taken along line II-II' of FIG. 1, and FIG. 3 is a cross-sectional view taken along line III-III' of FIG. 1.

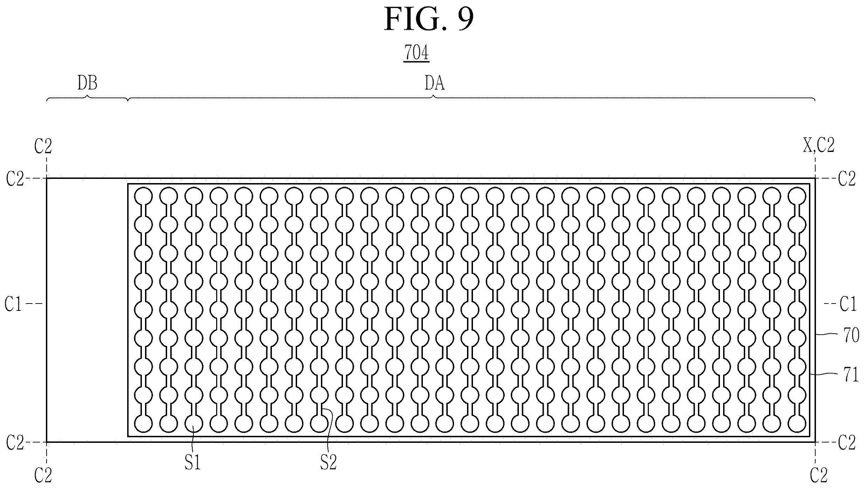

As shown in FIG. 1 to FIG. 3, an electrode 700 according to an example embodiment may include a substrate 70 and an active material layer 71 formed on a surface of the substrate 70. The electrode 700 is described taking an example of a sheet type included in the laminated electrode assembly of a rechargeable battery described later, but is not limited thereto, and may be used for an electrode (see FIG. 9) of a wound-type electrode assembly.

The substrate 70 may include an electrode active portion DA and an electrode uncoated region DB, the active material layer 71 may be formed in the electrode active portion DA, and the electrode uncoated region DB may have a form protruding from the electrode active portion, in order to draw the current outward.

Meanwhile, holes S1 may be formed in the active material layer 71. The holes S1 may be holes having circular or polygon planar shapes, and may form a matrix by being disposed at predetermined, regular or desired intervals. The holes S1 may have narrowing widths away from a surface of the active material layer 71 to be adjacent to the substrate, to have the shape of a cone or a polyhedral pyramid.

The holes S1 may have gradually increasing depths from an edge C2 to a central portion C1.

The depth of the holes S1 indicates a depth from the surface of the active material layer 71, and a depth H1 of the hole S1 that is deepest at a center C1 may be deeper by more than twice a depth H2 of the hole S1 that is shallowest at the edge C2.

The hole S1 the depth H1 located at the center C1 may be 50% to 70% of a thickness T of the active material layer 71, and the depth H2 of the hole S1 located at the edge C2 may be 10% to 20% of the thickness T of the active material layer.

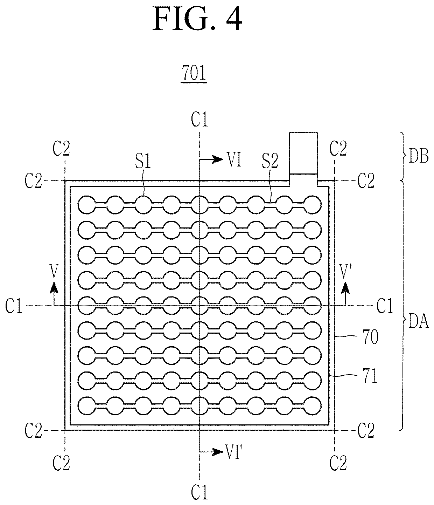

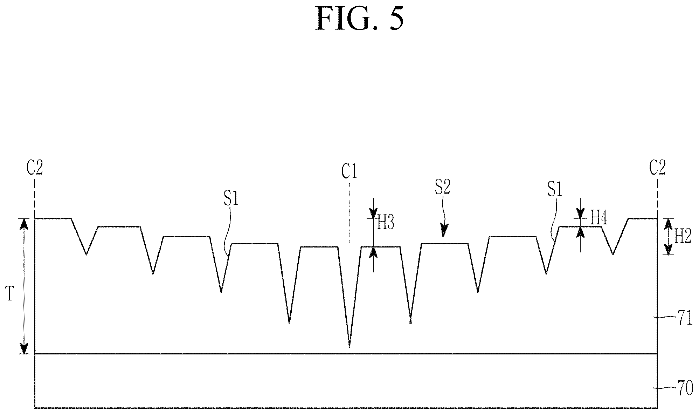

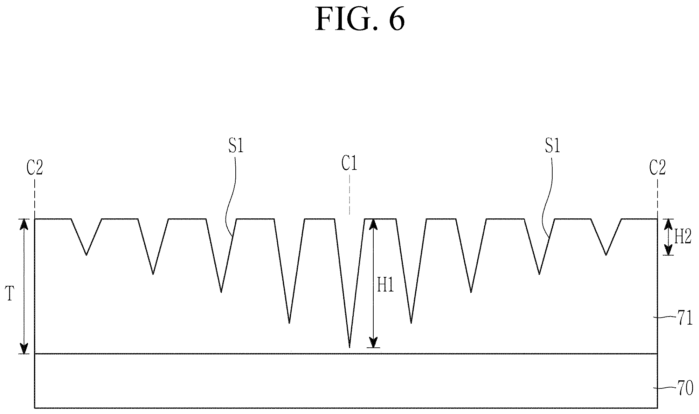

FIG. 4 is a top plan view of an electrode included in a rechargeable battery according to another example embodiment, FIG. 5 is a cross-sectional view taken along line V-V' of FIG. 4, and FIG. 6 is a cross-sectional view taken along line VI-VI' of FIG. 4.

As shown in FIG. 4 to FIG. 6, an electrode 701 according to an example embodiment may include the substrate 70, and the active material layer 71 formed on the surface of the substrate 70. The electrode 701 is described taking an example of a sheet type included in the laminated electrode assembly of a rechargeable battery described later, but is not limited thereto, and may be used as an electrode (see FIG. 9) of a wound-type electrode assembly.

The substrate 70 may include the electrode active portion DA and the electrode uncoated region DB, the active material layer 71 may be formed in the electrode active portion DA, and the electrode uncoated region DB may have a form protruding from the electrode active portion, in order to draw the current outward.

Meanwhile, connection portions S2 connecting the at least some of the holes S1 together may be formed in the active material layer 71. Interiors of the holes S1 and the connection portions S2 may be connected to each other.

The holes S1 may have circular or polygon planar shapes, and may form a matrix by being disposed at predetermined intervals. The holes S1 may have a narrowing width away from the surface of the active material layer 71 adjacent to the substrate, and may have the shape of a cone or polyhedral pyramid.

The connection portions S2 may be grooves having a predetermined width, and may connect the holes S1.

The hole S1 and the connection portion S2 may have a depth that is gradually increasing from the edge C2 to the central portion C1.

The depth of the holes S1 indicates a depth from the surface of the active material layer 71, and the depth H1 of the hole S1 that is the deepest at the center C1 may be deeper by more than twice the depth H2 of the hole S1 that is the shallowest at the edge C2. The depth H1 of the hole S1 located at the center C1 may be 50% to 70% of the thickness T of the active material layer 71, and the depth H2 of the hole S1 located at the edge C2 may be 10% to 20% of the thickness T of the active material layer.

The depth of the connection portion S2 indicates a depth from the surface of the active material layer 71, and a depth H3 of the connection portion S2 that is deepest at the center C1 may be deeper by more than twice a depth H4 of the connection portion S2 that is shallowest at the edge C2. The depth H3 of the connection portion S2 located at the center C1 may be 50% to 70% of the thickness T of the active material layer 71, and the depth H4 of the connection portion S2 at the edge C2 may be 10% to 20% of the thickness T of the active material layer.

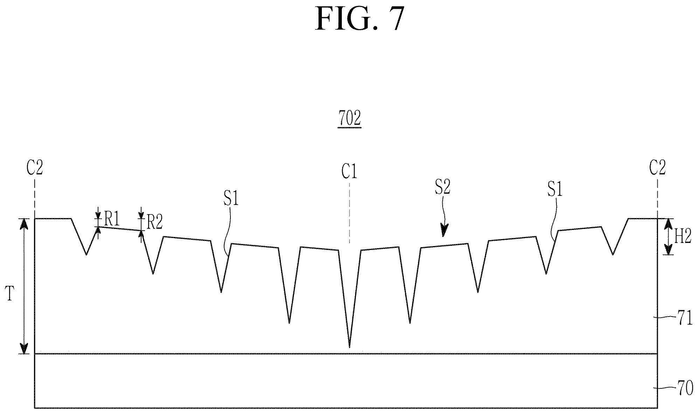

The depths H3 and H4 of the connection portions S2 may be formed in the same depth from one side to the other side, but it is not limited thereto, and as shown in FIG. 7, may gradually change.

FIG. 7 is a cross-sectional view of an electrode for a rechargeable battery according to another example embodiment.

As shown in FIG. 7, in an electrode 702 for a rechargeable battery according to another example embodiment, the active material layer 71 is formed on the substrate 70, and as shown in FIG. 4, the connection portions S2 connecting between the holes S1 is formed.

The depth of one connection portion S2 connecting two holes S1 may gradually increase from a first side R1 to a second side R2. That is, the depth may become deeper from the first side R1 adjacent to the edge C2 to the second side R2 adjacent to the center C1.

As such, when formed to have a hole or a connection portion as in an example embodiment, the electrolyte impregnation property at the center and edge of the electrode assembly is improved, so that the impregnation time can be reduced.

Table 1 shows the time measured for the contact angle to reach 0 degrees according to both comparative examples and the examples of this disclosure.

Comparative Examples 1 and 2, and Examples 1 and 2 have active material layers with the same active material, but in Comparative Example 1, the active material layer is formed by applying the active material without a separate process, and in Comparative Example 2, the active material layer have holes of the same depth. Example 1 includes the active material layer having the holes shown in FIG. 2 and FIG. 3, and Example 2 includes the active material layer having the holes and connection portions shown in FIG. 5 and FIG. 6.

In Comparative Examples 1 and 2, and Examples 1 and 2, 1 µlof electrolyte was dropped onto each of the active material layers, and the time until the contact angle became 0 degrees was measured. The experiment was repeated 10 times after producing Comparative Examples 1 and 2 and Examples 1 and 2 of the same structure.

**Table 1:**

| Classification | Time to reach electrolyte contact angle of 0° (sec) |
|---|---|
| Comparative Example 1 | 80 - 110 |
| Comparative Example 2 | 52 - 68 |
| Example 1 | 36 - 45 |
| Example 2 | 12 - 32 |

The shorter the time for the contact angle to reach 0 degrees, the greater the hydrophilicity, which increases the impregnation property of the electrolyte.

Referring to Table 1, the time for the contact angle to reach 0 degrees decreases from Comparative Example 1, which does not have holes, to Comparative Example 2, which has holes of the same depth, but the time is still more than 50 seconds.

In Example 1, where the depth of the holes was gradually increased, the time to reach the contact angle was reduced to less than 45 seconds, and in Example 2, where the hole and the connection portion were formed together, it was reduced to 32 seconds, which is a significant decrease compared to Comparative Examples 1 and 2.

During the formation process performed after battery manufacturing, lithium precipitation may occur in the non-impregnated region of the electrolyte, but, in an example embodiment, the impregnation speed of the electrolyte is increased so that sufficient impregnation is performed before the formation process, thereby reducing or preventing lithium precipitation.

In addition, in examples of the present disclosure, the wettability of the electrolyte is improved so that the electrolyte is substantially uniformly impregnated. Therefore, a membrane binder such as PVdF, or an acrylate series, can sufficiently absorb the electrolyte and is advantageous for gelation, which can reduce or prevent the occurrence of interfacial lifting between the separator and the electrode.

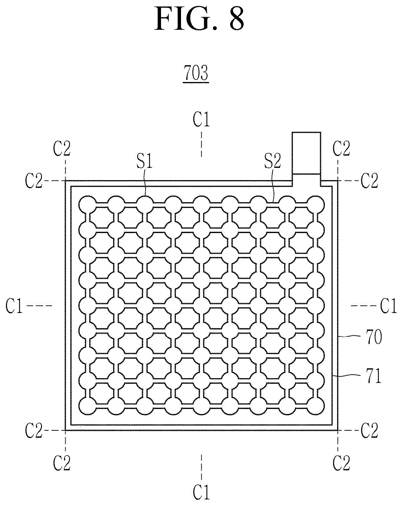

FIG. 8 and FIG. 9 are schematic top plan views of an electrode for a rechargeable battery, according to another example embodiment.

As shown in FIG. 8, an electrode 703 for a rechargeable battery according to another example embodiment may include the holes S1 and connection portions S2.

The connection portions S2 may be formed in only a first direction as shown in FIG. 4, but as shown in FIG. 8, may also be formed in a second direction substantially perpendicular to the first direction illustrated in FIG. 4 to connect between the neighboring holes S1. Therefore, the holes S1 and the connection portions S2 may form a lattice form.

An electrode 704 for a rechargeable battery according to another example embodiment shown in FIG. 9 may include the substrate 70 in a strip-shape that has a length in the first direction, and the active material layer 71 is formed along the length direction of the substrate 70 and on the substrate 70.

The substrate 70 may include the electrode active portion DA and the electrode uncoated region DB, and the electrode uncoated region DB may be connected to a front-side tab (not shown) configured to draw the current outward, and may be located on a first side of the substrate.

The electrode shown in Fig. 9 can be used as an electrode of a jelly roll-shaped electrode assembly that is wound around a winding axis X. In Fig. 9, the winding axis X is illustrated at an end of the electrode active portion DA, but is not limited thereto, and the winding axis X may be positioned at an end of the electrode uncoated portion DB located on the opposite side as needed.

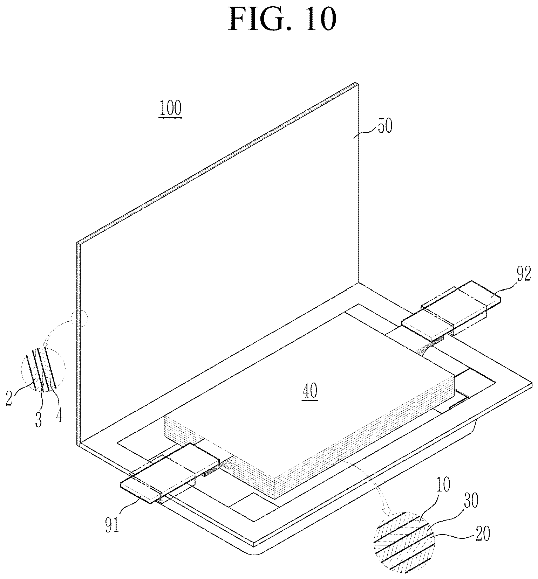

FIG. 10 is a schematic perspective view of a rechargeable battery, according to an example embodiment.

The rechargeable battery according to an example embodiment may include a case 50 configured to accommodate an electrode assembly 40, and an electrolyte (not shown).

The electrode assembly 40 may be a laminated electrode assembly 40 in which a plurality of positive electrodes 10 and a plurality of negative electrodes 20 are alternatively stacked with separators 30 interposed therebetween.

As the separator 30, which is or includes at least one of a polymer film that allows lithium ions to pass through, polyethylene, polypropylene, polyvinylidene fluoride or a multilayer of two or more thereof may be used, and a mixed multilayer such as a polyethylene/polypropylene two-layer separator, a polyethylene/polypropylene/polyethylene three-layer separator, a polypropylene/polyethylene/polypropylene three-layer separator, or the like may be used.

A negative electrode 20 may include an electrode active portion in which the active material layer is formed on a substrate made of a metal thin film, and the electrode uncoated region exposing the substrate by not having the active material applied thereon. The electrode uncoated region extruding to the outside may be electrically connected by, e.g., being welded, and may be connected to an electrode tab 92 in order to draw the current outward.

The active material layer may be formed on one surface, or on both surfaces, of the substrate. The active material layer may be one of the electrodes shown in FIG. 1 to FIG. 8, and a hole, or a connection portion together with the hole may be formed in the active material layer.

The active material layer may include a negative active material, and may further include a binder and/or a conductive material. For example, the negative active material layer may include 90 wt% to 99 wt% of the negative active material, 0.5 wt% to 5 wt% of the binder, and 0 wt% to 5 wt% of the conductive material.

### NEGATIVE ACTIVE MATERIAL

The negative active material includes at least one of a material capable of reversibly intercalation/deintercalating lithium ions, lithium metal, an alloy of lithium metal, a material capable of being doped and undoped on lithium, or a transition metal oxide.

The material capable of reversibly intercalating/deintercalating lithium ions is or includes a carbon-based negative active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include at least one of soft carbon or hard carbon, mesophase pitch carbide, fired coke, and the like.

The alloy of the lithium metal may include an alloy of lithium and a metal including at least one of Na, K, Rb, Cs, Fr, Be, Mg, Ca, Sr, Si, Sb, Pb, In, Zn, Ba, Ra, Ge, Al and Sn.

As a material that may be doped and dedoped in the lithium, Si-based negative active material or Sn-based negative active material may be used. The Si-based negative active material may be silicon, a silicon-carbon composite, silicon oxides (SiOx) (0<x≤2), an Si-Q alloy (wherein Q is or includes at least one of an alkali metal, an alkaline earth metal, a Group 13 element, a Group 14 element (excluding Si), a Group 15 element, a Group 16 element, a transition metal, a rare earth element and a combination thereof), or a combination thereof. The Sn-based negative active material may be or include at least one of Sn, SnO₂, a Sn-based alloy, or a combination thereof.

The silicon-carbon composite may be or include a composite of silicon and amorphous carbon. According to the example embodiment, the silicon-carbon composite may be or include silicon particles and may have a form in which amorphous carbon is coated on the surface of the silicon particles. For example, the silicon-carbon composite may include a secondary particle (core) in which silicon primary particles are assembled, and an amorphous carbon coating layer (shell) disposed on the surface of the secondary particles. The amorphous carbon may also be disposed between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer disposed on the surface of the core.

The Si-based negative active material or Sn-based negative active material may be used by being mixed with a carbon-based negative active material.

### BINDER

The binder is configured to adhere the negative active material particles to each other, and to adhere the negative active material to the current collector. As the binder, a non-aqueous binder, an aqueous binder, a dry binder, or a combination thereof may be used.

The non-aqueous binder may be or include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylate styrene-butadiene rubber, a (meth)acrylonitrile-butadiene rubber, a (meth)acrylonitrile-butadiene rubber, a (meth)acrylic rubber, a butyl rubber, a fluorine rubber, a polyethylene oxide, polyvinylpyrrolidone, polyepichlorohydrin, a polyphosphazene, a poly(meth)acrylonitrile, an ethylene propylene diene copolymer, a polyvinylpyridine, a chlorosulfonated polyethylene, latex, a polyester resin, a (meth)acrylic resin, a phenol resin, an epoxy resin, a polyvinyl alcohol, and a combination thereof.

When the aqueous binder is used as the negative electrode binder, a cellulose-based compound that may impart viscosity may be further included. As the cellulose-based compound, at least one of carboxymethyl cellulose, hydroxypropylmethyl cellulose, methyl cellulose, or alkali metal salts thereof may be mixed. The alkali metal may include at least one of Na, K or Li.

The dry binder is a polymer material capable of being fiberized, and may be or include, for example, at least one of polytetrafluoroethylene, polyvinylidene fluoride, a polyvinylidene fluoride-hexafluoropropylene copolymer, a polyethylene oxide, or a combination thereof.

### CONDUCTIVE MATERIAL

The conductive material is used to provide conductivity to the electrode, and any material that does not cause chemical changes and is electrically conductive can be used in the battery being constructed. Specific examples may include, for example, a carbon-based material such as at least one of natural graphite, artificial graphite, carbon black, acetylene black, Ketjen black, a carbon fiber, a carbon nanofiber, and a carbon nanotube; and may be a metal-based material in the form of metal powder or metal fiber including at least one of copper, nickel, aluminum, silver, and the like; a conductive polymer such as a polyphenylene derivative; or a mixture thereof.

A positive electrode 20 may include the electrode active portion and the electrode uncoated region, the active material layer may be formed in the electrode active portion, and the electrode uncoated region may have a form protruding from the electrode active portion, in order to draw the current outward.

The substrate may be made of or include, but is not limited to, aluminum (Al). The active material layer may be one of the electrodes shown in FIG. 1 to FIG. 8, and a hole, or a connection portion together with the hole may be formed in the active material layer.

The active material layer may be formed on one surface, or on both surfaces, of the substrate. The active material layer includes a positive active material, and may further include a binder and/or a conductive material. The content of active material in the positive active material may be in a range of about 90 wt% to about 99.5 wt% based on 100 wt% of the positive the active material layer, and the content of the binder and the conductive material may be in a range of about 0.5 wt% to about 5 wt% based on 100 wt% of the positive the active material layer, respectively.

### POSITIVE ACTIVE MATERIAL

As the positive active material, a compound capable of reversible intercalation and deintercalation of lithium (lithiated intercalation compound) may be used. Specifically, the active material may be or include at least one composite oxide formed of a metal such as or including at least one of cobalt, manganese, nickel, and a combination thereof and the lithium.

The composite oxide may be or include a lithium transition metal composite oxide, for example, at least one of a lithium nickel-based oxide, a lithium cobalt-based oxide, a lithium manganese-based oxide, a lithium iron phosphate-based compound, a cobalt-free nickel-manganese-based oxide, or a combination thereof.

For example, a compound represented by one of the following formulas may be used. LiₐA_{1-b}X_{b}O_{2-c}Dₒ (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formula, A indicates at least one of Ni, Co, Mn, or a combination thereof; X indicates at least one of Al, Ni, Co, Mn, Cr, Fe, Mg, Sr, V, a rare earth element or a combination thereof; D indicates at least one of O, F, S, P, or a combination thereof; G indicates at least one of Al, Cr, Mn, Fe, Mg, La, Ce, Sr, V, or a combination thereof; and L¹ indicates at least one of Mn, Al or a combination thereof.

For example, the positive active material may be or include a high-nickel-based positive active material in which a nickel content is in a range of about 80 mol% or more, about 85 mol% or more, about 90 mol% or more, about 91 mol% or more, or about 94 mol% or more and about 99 mol% or less with respect to 100 mol% of metal excluding lithium in the lithium transition metal composite oxide. The high-nickel-based positive active material may realize high capacity, and thus may be applied to high-capacity and high-density lithium rechargeable batteries.

### BINDER

The binder is configured to adhere the positive active material particles to each other, and also to adhere the positive active material to the current collector well. Representative examples of the binder include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

### CONDUCTIVE MATERIAL

The conductive material is used to provide conductivity to the electrode, and any material that does not cause chemical changes and is electrically conductive can be used in the battery being constructed. Examples of the conductive material may include, for example, a carbon-based material such as at least one of natural graphite, artificial graphite, carbon black, acetylene black, Ketjen black, a carbon fiber, a carbon nanofiber, and a carbon nanotube; and may be a metal-based material in the form of metal powder or metal fiber including at least one of copper, nickel, aluminum, silver, and the like; a conductive polymer such as a polyphenylene derivative; or a mixture thereof.

Referring back to FIG. 7, the electrode assembly 40 may be accommodated within a pouch or a can-shaped prismatic case together with the electrolyte, and used as a rechargeable battery.

The electrolyte includes a non-aqueous organic solvent and a lithium salt. The non-aqueous organic solvent serves as a medium through which ions involved in the electrochemical reaction of the battery can move.

The lithium salt is a substance that dissolves in an organic solvent and acts as a source of lithium ions in the battery, enabling the basic operation of a lithium rechargeable battery and promoting the movement of lithium ions between the positive electrode and the negative electrode. Representative examples of the lithium salt may include one or two or more of LiPF₆, LiBF₄, LiSbF₆, LiAsF₆, LiN(SO₂ C₂F₅)₂, Li(CF ₃ SO ₂) ₂ N, LiN(SO₃C₂F₅) ₂, LiC₄F₉SO₃, LiClO₄, LiAlO₂, LiAlCl₄, LiN(Cx F₂ₓ₊₁ SO₂)(C yF_{2y+1}SO₂) (here, x and y are natural numbers, for example, integers of 1 to 20), LiCl, Lil and LiB(C₂O₄)₂ (lithium bis(oxalato) borate: LiBOB) as a supporting electrolytic salt.

It is recommended that the concentration of lithium salt be used within the range of about 0.1M to 2.0M. When the concentration of the lithium salt is included within the above range, a desired or improved electrolyte performance may be provided because the electrolyte has appropriate conductivity and viscosity, and lithium ions may effectively move.

The pouch-type case 50 illustrated in FIG. 10 may be formed of or include a laminate exterior material, and the laminate exterior material may be formed of or include, for example, a multi-layered structure having a first insulating layer 2, a metal layer 3, and a second insulating layer 4. Of course, various other adhesive layers or functional layers may be added.

The first insulating layer 2 is an inner side surface of the laminated exterior material, and is formed of or include a material having insulating properties and thermally adhesive properties, such that the material may be sealed by heat fusion while the electrode assembly 40 is accommodated therein. In addition, the first insulating layer 2 is formed at one surface of the metal layer 3, and forms the inner side surface of the laminated exterior material facing the electrode assembly 40. The first insulating layer 2 may be formed of casted polypropylene (CPP) or its equivalents, which does not react with electrolyte.

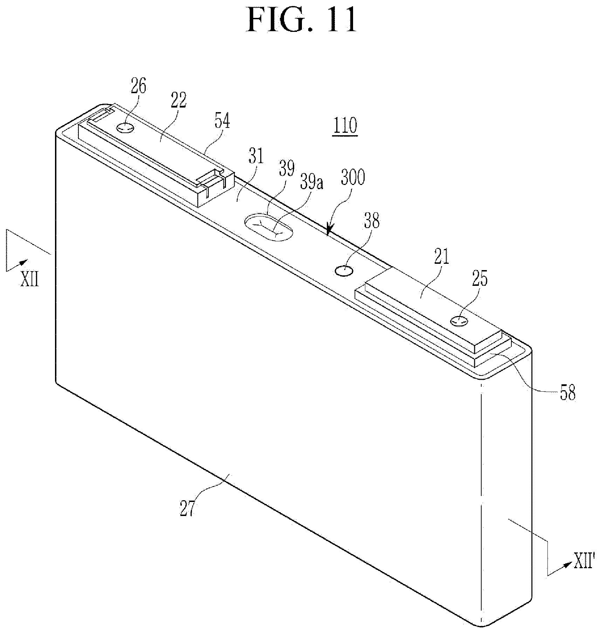

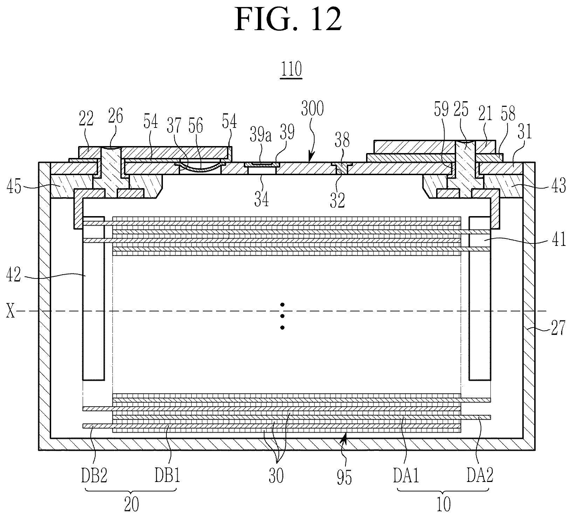

FIG. 11 is a schematic perspective view of a rechargeable battery according to an example embodiment, and FIG. 12 is a drawing taken along line XII-XII' of FIG. 11.

As shown in FIG. 11 and FIG. 12, a rechargeable battery 110 according to an example embodiment may include an electrode assembly 95, a case 27 accommodating the electrode assembly 95, and a cap assembly 300 installed on an opening of the case 27.

The electrode assembly 95 includes a positive electrode 10 and a negative electrode 20, which are sequentially stacked, and a separator 30 disposed therebetween. The separator 30 is disposed between the positive electrode 10 and the negative electrode 20, and insulates the positive electrode 10 and the negative electrode 20 from each other.

The electrode assembly 95 may be a jelly roll type that is wound around a winding axis X with a separator 30 interposed between the positive electrode (or first electrode) 10 and the negative electrode (or second electrode) 20, and then pressed flat.

The positive electrode 10, the separator 30, and the negative electrode 20 are almost the same as the positive electrode, the separator, and the negative electrode of the rechargeable battery illustrated in FIG. 7, and only the differences will be described in detail below.

The positive electrode 10 and the negative electrode 20 may respectively include the electrode active portions DA1 and DB1, and the electrode uncoated regions DA2 and DB2, a positive electrode substrate and a negative electrode substrate is formed in a band shape in the first length direction, and the electrode uncoated regions DA2 and DB2 are located on the edge of the substrate and continuously formed along the first length direction. Alternatively, as shown in FIG. 6, the electrode uncoated regions may be formed adjacent to an end point in the length direction.

The electrode uncoated region DA2 of the positive electrode 10 and the electrode uncoated region DB2 of the negative electrode 20 may be located on opposite sides of the electrode active portions DA1 and DB1.

Alternatively, the electrode uncoated regions of the positive electrode and of the negative electrode may have a form protruding with a predetermined or desired interval along the wound direction from the substrate, or as shown in FIG. 9, may be located on a frontal end or rear end of the strip-shaped electrode.

As shown in FIG. 9, in the positive electrode 10 or the negative electrode 20, the holes S1 and the connection portions S2 may be formed in the active material layer.

The electrolyte may be injected in the form of liquid through an electrolyte injection opening or port 32, and may move to the center of the electrode assembly by passing through the electrode uncoated region located on the edge of the electrode assembly. That is, the electrolyte may move in a direction parallel to the winding axis X.

The connection portion S2 of the electrode shown in FIG. 9 may be formed in a direction of a shortest side of the electrode direction, and may connect neighboring holes S1. At this time, the shortest side of the electrode may be a direction parallel to the winding axis X of the wound-type electrode assembly.

For example, the electrode assembly 95 may be accommodated within the case 27 together with the electrolyte.

The case 27 may be made of or include a metal such as aluminum, and may have, e.g., a substantially rectangular parallelepiped shape. One side of the case 27 may be opened, and a cap plate may be installed on the opened side of the case 27.

The cap assembly 300 includes a cap plate 31 coupled to the case 27 to block the opening of the case 27, a positive electrode terminal 21 electrically connected to the positive electrode 10, and a negative electrode terminal 22 electrically connected to the negative electrode 20, wherein the positive and negative electrode terminals 21 and 22 protrude outside of the cap plate 31.

The cap plate 31 may have the shape of a long plate extending in one direction and is coupled to the opening of the case 27.

The cap plate 31 has an injection opening or port 32 penetrating the inside. The injection opening or port 32 is for injecting an electrolyte solution, and is installed with a sealing stopper 38. In addition, a vent plate 39 with a notch 39a is installed in a vent hole 34 so that the cap plate 31 may be opened at a set pressure.

The positive terminal 21 and the negative terminal 22 are configured to protrude upward from the cap plate 31. The positive terminal 21 is electrically connected to the positive electrode 10 through the current collecting tab 41, and the negative terminal 22 is electrically connected to the negative electrode 20 through the current collecting tab 42.

A terminal connection member 25 is installed between the positive terminal 21 and the current collecting tab 41 to electrically connect the positive terminal 21 and the current collecting tab 41. The terminal connection member 25 is inserted into the hole formed in the positive terminal 21, so that the upper end thereof is fixed to the positive terminal 21 by, e.g., welding, and the lower end thereof is fixed to the current collecting tab 41 by, e.g., welding.

Between the terminal connection member 25 and the cap plate 31, a sealing gasket 59 is inserted into the hole through which the terminal connection member 25 passes, and a lower insulating member 43 into which a lower portion of the terminal connection member 25 is inserted is installed under the cap plate 31. A connection plate 58 is installed between the positive terminal 21 and the cap plate 31 to electrically connect the positive terminal 21 and the cap plate 31. The terminal connection member 25 is installed by being inserted into the connection plate 58. Accordingly, the cap plate 31 and the case 27 are charged with the positive electrode 10.

A terminal connection member 26 is installed between the negative terminal 22 and the current collecting tab 42 to electrically connect the negative terminal 22 and the current collecting tab 42. The terminal connection member 26 is inserted into the hole formed in the negative terminal 22, so that the upper end thereof is fixed to the negative terminal 22 by welding, and the lower end thereof is fixed to the current collecting tab 42 by welding.

Between the negative terminal 22 and the cap plate 31, a gasket 59 for sealing is inserted and installed into the hole through which the terminal connection member 26 passes, and an upper insulating member 54 is installed to insulate between the negative terminal 22 and the cap plate 31. The terminal connection member 26 may be installed by being inserted into a hole of the upper insulating member 54, and the upper insulating member 54 may be configured to surround an end of the negative terminal 22.

In addition, under the cap plate 31, a lower insulating member 45 is installed to insulate the negative terminal 22 and the current collecting tab 42 from the cap plate 31.

A short-circuiting hole 37 may be formed in the cap plate 31, and a short-circuiting member 56 may be installed in the short-circuiting hole 37. The short-circuiting member 56 includes a curved portion convexly curved downward in an arc shape, and an edge portion formed on the outside of the curved portion and fixed to the cap plate 31. The upper insulating member 54 may have a cutout that overlaps the short-circuiting hole 37, and the short-circuiting member 56 overlaps the negative terminal 22 exposed through the cutout.

The short-circuiting member 56 is electrically connected to the cap plate 31, and is deformed when the internal pressure of the rechargeable battery 110 increases, causing short-circuiting between the positive and negative electrodes 10 and 20. In other words, when gas is generated due to an abnormal reaction inside the rechargeable battery 110, the internal pressure of the rechargeable battery 110 increases. When the internal pressure of the rechargeable battery 110 becomes higher than a desired pressure, the curved portion is deformed to be convex upward, and at this time, the negative terminal 22 and the short-circuiting member 56 come into contact with each other, causing a short-circuit.

In order to facilitate short-circuiting between the negative terminal 22 and the short-circuiting member 56, the negative terminal 22 may further include at least one protrusion (not shown) protruding toward the short-circuiting member 56, and the protrusion may be spaced apart from the short-circuiting member 56.

In the above example embodiment, a rechargeable battery including a prismatic case has been described, but the present disclosure is not limited thereto, and the rechargeable battery may include a cylindrical case.

### Description of symbols:

| | | | |
|---|---|---|---|
| 27, 5 0: | case | 40, 95: | electrode assembly |
| 70: | substrate | 71: | the active material layer |
| 100, 110: | rechargeable battery | 300: | cap assembly |
| 700, 701, 702, 703, 704: | electrodes | | |

## Claims

1. An electrode (10, 20, 700-704) for a rechargeable battery (100, 110), the electrode (10, 20, 700-704) comprising:
a substrate (70), and
an active material layer (71) formed on the substrate (70), the active material layer (71) having a plurality of holes,
wherein the plurality of holes having depths becoming deeper from an edge of the substrate (70) to a center of the substrate (70).

2. The electrode of claim 1, wherein the holes are arranged in a matrix configuration and are spaced at desired intervals.

3. The electrode of claim 1 or 2, further comprising at least one connection portion connecting the holes.

4. The electrode of claim 3, wherein the at least one connection portion is deeper from the edge of the substrate (70) to the center of the substrate (70).

5. The electrode of claim 3 or 4, wherein the at least one connection portion comprises a first connection portion formed in a substantially horizontal direction and a second connection portion formed in a substantially vertical direction.

6. An electrode assembly (40, 95), comprising:
a separator (30); and
a positive electrode (10) and a negative electrode (20) located on opposite sides of the separator (30),
wherein at least one of the positive electrode (10) and the negative electrode (20) comprises a substrate (70), and an active material layer (71) formed on the substrate (70) and having a plurality of holes, the plurality of holes having depths becoming deeper from an edge of the substrate (70) to a center of the substrate (70).

7. The electrode assembly of claim 6, wherein the holes are arranged in a matrix configuration with a desired interval therebetween.

8. The electrode assembly of claim 6 or 7, further comprising at least one connection portion connecting the holes.

9. The electrode assembly of claim 8, wherein the at least one connection portion is deeper from the edge of the substrate (70) to the center of the substrate (70).

10. The electrode assembly of claim 8, wherein the at least one connection portion comprises a first connection portion in a substantially horizontal direction and a second connection portion in a substantially vertical direction.

11. The electrode assembly of any one of the claims 8 to 10, wherein:
the positive electrode (10), the separator (30), and the negative electrode (20) form a jelly-roll structure wound in a band shape in which a length in a first direction is longer than a length in a second direction that is substantially perpendicular to the first direction; and
the at least one connection portion has a depth that becomes deeper in the second direction.

12. The electrode assembly of any one of the claims 6 to 11, wherein:
the positive electrode (10), the separator (30), and the negative electrode (20) form a jelly-roll structure wound in a band shape in which a length in a first direction is longer than a length in a second direction that is substantially perpendicular to the first direction; and
the hole has a depth that becomes deeper in the second direction.

13. The electrode assembly of claim 11 or 12, wherein the second direction is the rotation axis direction of the jelly-roll.

14. A rechargeable battery (100, 110), comprising:
the electrode assembly (40, 95) of any one of the claims 6 to 13;
a case (27, 50) accommodating the electrode assembly (40, 95); and
an electrolyte accommodated within the case (27, 50) together with the electrode assembly (40, 95),
wherein at least one of the plurality of holes has a depth that becomes deeper along a direction in which the electrolyte is injected.

15. The rechargeable battery (100, 110) of claim 14, wherein the electrode assembly (40, 95) further comprises at least one connection portion connecting the holes, and
wherein the at least one connection portion has a depth that becomes deeper along a direction in which the electrolyte is injected.
